# EUROPÄISCHE PATENTSCHRIFT

(11) **EP 1 029 716 B1**
(45) Veröffentlichungstag und Bekanntmachung des Hinweises auf die Patenterteilung: **02.07.2003**
(21) Anmeldenummer: 99120198.9
(22) Anmeldetag: 09.10.1999
(51) Int. Cl.: B60C 23/00, B60C 23/04, B60C 23/06

(54) **Unwucht- und Luftdruckerkennung durch Lenkmomente**
Detecting imbalance and air pressure by using the steering moment
Détection de balourd et de pression par le couple de guidage de roues

(30) Priorität: 15.02.1999 DE 19906300
(43) Veröffentlichungstag der Anmeldung: 23.08.2000
(73) Patentinhaber: ROBERT BOSCH GMBH, 70442 Stuttgart (DE)
(72) Erfinder: Lohner, Herbert, 71292 Friolzheim (DE); Dominke, Peter, 74321 Bietigheim-Bissingen (DE); Cao, Chi-Thuan, Dr., 70825 Korntal-Muenchingen (DE); Pfeiffer, Wolfgang, 71723 Grossbottwar (DE); Allgeier, Thorsten, 74078 Heilbronn (DE); Yuan, Bo, Dr., 76131 Karlsruhe (DE); Harter, Werner, 75428 Illingen (DE); Sauer, Thomas, 70599 Stuttgart (DE)

(56) Entgegenhaltungen:
- US-A- 5 747 950
- PATENT ABSTRACTS OF JAPAN vol. 2000, no. 03, 30. März 2000 (2000-03-30) & JP 11 334634 A (KOYO SEIKO CO LTD), 7. Dezember 1999 (1999-12-07)
- PATENT ABSTRACTS OF JAPAN vol. 1995, no. 01, 28. Februar 1995 (1995-02-28) & JP 06 286632 A (MAZDA MOTOR CORP), 11. Oktober 1994 (1994-10-11)
- PATENT ABSTRACTS OF JAPAN vol. 1995, no. 05, 30. Juni 1995 (1995-06-30) & JP 07 052622 A (MAZDA MOTOR CORP), 28. Februar 1995 (1995-02-28)

## Beschreibung

### Stand der Technik

Die Erfindung betrifft ein Verfahren zur Erkennung einer Unwucht und ein Verfahren zur Erkennung eines Reifenluftdrucks in durch eine elektrische Lenkung gelenkten Rädern eines Kraftfahrzeugs mittels einer Messung des oder der an den gelenkten Rädern durch einen elektrischen Stellmotor aufgebrachten Lenkmoments oder Lenkmomente.

In Steer-by-Wire-Lenksystemen ist das Lenkrad von der radseitigen Lenkung entkoppelt. Dies hat den Vorteil, daß der Fahrer keine Störungen von der Fahrbahn am Lenkrad spürt. Da der feinfühlige Fahrer bei herkömmlichen Lenkungen, bei der eine mechanische Verbindung zwischen dem Lenkrad und dem gelenkten Rädern vorliegt, über das Lenkrad jedoch auch unwuchtige Räder oder sogar falschen Luftdruck erkennen kann, ist es bei einer elektrischen Lenkung, z. B. einer Steer-by-Wire-Lenkung oder bei einer elektrischen Servolenkung, bei denen die Lenkmomente die gelenkten Räder durch Elektromotoren erzeugt werden, erforderlich, Signale zu gewinnen und dem Fahrer zur Anzeige zu bringen, die eine Unwucht in den gelenkten Rädern oder einen falschen Luftdruck angeben.

### Aufgabe und Vorteile der Erfindung

Nach dem oben gesagten ist es Aufgabe der Erfindung, ein Verfahren anzugeben, welches anhand der an jedem einzelnen Rad gemessenen Lenkmomente oder anhand des den Rädern gemeinsamen gemessenen Lenkmoments eine Unwucht in den gelenkten Rädern erkennen und so eine Information erzeugen kann, die dem Fahrer die durch die elektrische Lenkung verlorengegangene Information zur Verfügung stellt.

Eine andere Aufgabe ist es, ein Verfahren anzugeben, welches einen falschen Reifendruck in einem der oder in den gelenkten Rädern anhand der einzeln gemessenen Lenkmomente oder anhand des an den gelenkten Rädern gemeinsam gemessenen Lenkmoments erkennen und dem Fahrer mitteilen kann.

Gemessen werden können die Lenkmomente einerseits über Momentensensoren an jedem einzelnen gelenkten Rad oder über den Strombedarf des elektrischen Stellmotors oder, wenn beide Räder getrennt gelenkt werden, über den Strombedarf der elektrischen Stellmotoren. Durch die Verwendung von Momentensensoren läßt sich das Lenkmoment für jedes einzelne Rad messen. Erfolgt die Messung über die Stromaufnahme des elektrischen Stellmotors, ist bei der elektrischen Servolenkung und bei einer Steer-by-Wire-Lenkung mit starrer Kopplung zwischen den Rädern eine Messung nur achsweise möglich. Ohne starre Kopplung bei radindividueller Lenkung können bei einem Steer-by-Wire-Lenksystem die Lenkmomente über die Strommessung jedes einzelnen elektrischen Stellmotors auch individuell ermittelt werden.

In dem erfindungsgemäßen Verfahren zur Erkennung einer Unwucht wird ein Erkennungsschritt ausgeführt, der erkennt, ob sich das oder die Lenkmomente periodisch in Abhängigkeit von der Drehzahl der gelenkten Räder bzw. des jeweiligen Rads ändert oder ändern. Werden die Lenkmomente, wie erwähnt, radweise gemessen, kann auf diese Weise das entsprechende, mit einer Unwucht behaftete Rad erkannt werden. Durch einen Auswerteschritt, der die auf die Unwucht zurückzuführenden periodischen Momentenänderungen auswertet, läßt sich ein Signal erzeugen, das eine Unwucht entweder an beiden gelenkten Rädern oder an einem der gelenkten Räder angibt. Diese Information kann dem Fahrer entweder durch eine haptische Rückwirkung am Lenkrad oder eine akustische und/oder optische Anzeige über ein vorhandenes Display angezeigt werden.

Ferner kann die Information auch in einem Fehlerspeicher abgelegt werden und später über eine Diagnoseschnittstelle von einem Werkstattpersonal oder einem Werkstattcomputer abgefragt werden.

Gemäß einem zweiten Aspekt der Erfindung wird in einem Verfahren ein fehlerhafter Reifenluftdruck anhand des an den gelenkten Rädern gemessenen Rückstellmoments oder anhand der an den beiden gelenkten Rädern gemessenen Rückstellmomente erkannt, wenn diese abhängig von einem jeweiligen Lenkwinkel von einem vorbestimmten Normalwert abweichen. Wenn dies der Fall ist, läßt sich in einem Auswerteschritt ein einen falschen Luftdruckwert in einem der Reifen oder auch in beiden Reifen angebendes Signal erzeugen, welches wiederum dem Fahrer entweder durch eine haptische Rückmeldung am Lenkrad oder durch eine akustische und/oder optische Anzeige an einem vorhandenen Display angezeigt werden kann. Werden die Lenkmomente der beiden gelenkten Räder getrennt gemessen, kann über eine Differenzmessung derselben über mehrere Lenkzyklen eine Luftdruckdifferenz der Räder erkannt werden. Auch dies kann dem Fahrer in geeigneter Weise mitgeteilt werden.

Selbstverständlich lassen sich im Auswerteschritt Störgrößen eliminieren, wie z. B. Fahrbahneinflüsse, die die Gefahr bergen, daß sie das Ergebnis des Erkennungsschritts verfälschen könnten. Solche Störgrößen können beispielsweise im Falle der Unwuchterkennung periodische Fahrbahnwelligkeiten, die z. B. bei den früher üblichen Betonplatten auf Autobahnen auftreten oder im Falle der Reifenluftdruckerkennung eine Fahrbahnoberfläche sein, die besonders hohe Rückstellkräfte der gelenkten Räder erforderlich macht, wie z. B. eine Sand- oder Schotterpiste. Signale, die solche die erfindungsgemäße Auswertung störenden Umwelteinflüsse angeben, können einer die erfindungsgemäßen Verfahren durchführenden Steuer/Regeleinheit von entsprechenden im Fahrzeug vorhandenen Sensoren und/oder von anderen Steuer- oder Regeleinheiten zugeführt werden.

Nach dem oben gesagten ist es einleuchtend, daß das Verfahren zur Ünwuchterkennung auch mit dem Verfahren zur Erkennung eines Reifenluftdrucks kombiniert werden kann.

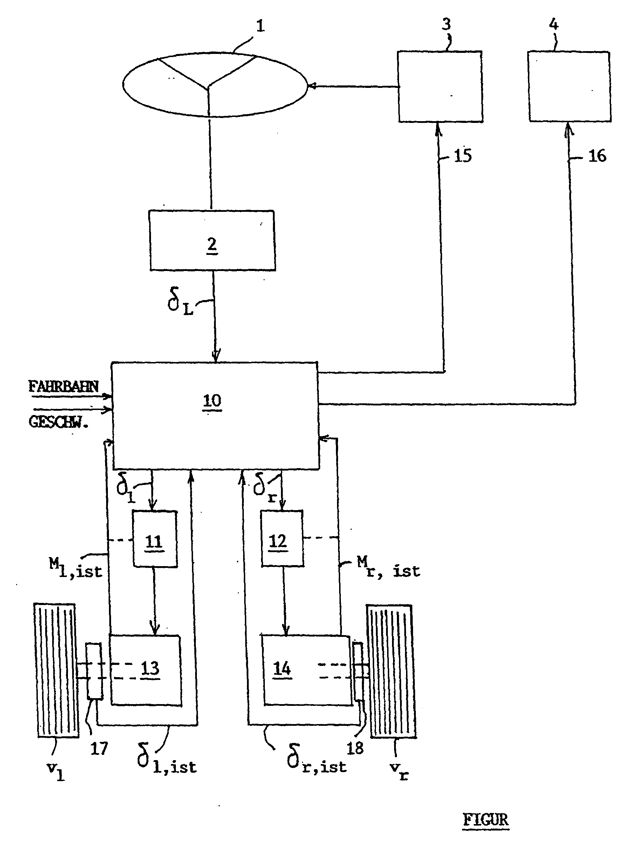

Nachstehend wird anhand der einzigen Figur ein Ausführungsbeispiel eines Systems beschrieben, das zur Ausführung des erfindungsgemäßen Unwucht- und Reifenluftdruckerkennungsverfahrens eingerichtet ist.

### Ausführungsbeispiel

Die Figur zeigt schematisch in Form eines Funktionsblockschaltbilds ein Steer-by-Wire-Lenksystem, bei dem keine mechanische Kopplung zwischen dem Lenkrad 1 und den gelenkten Vorderrädern Vₗ und Vᵣ mehr vorliegt.

Der am Lenkrad 1 eingestellte Lenkradwinkel wird von einem Winkelsensor 2 erfaßt und als ein elektrisches Signal δL einer Steuer/Regeleinheit 10 eingegeben. Die Steuer/Regeleinheit 10 ist beispielhaft zur getrennten synthetischen Erzeugung jeweils eines Lenkwinkels δₗ für das linke gelenkte Rad Vₗ und eines Lenkwinkels δᵣ für das rechte gelenkte Rad Vᵣ eingerichtet. D. h., daß die Steuer/Regeleinheit 10 den Lenkwinkeln δₗ und δᵣ und den jeweiligen Momenten entsprechende Signale jeweils über eine Spannungs/Stromregeleinheit 11 und 12 einem linken und rechten elektrischen Stellmotor 13, 14 zuführt, die jeweils zur Einstellung der Lenkwinkel am linken und rechten gelenkten Rad Vₗ, Vᵣ eingerichtet sind. Die Steuer/Regeleinheit 10 empfängt dazu jeweils ein gemessenes linkes und rechtes Ist-Lenkmomentensignal M_{l,ist} und M_{r,ist}, je ein gemessenes linkes und rechtes Ist-Lenkwinkelsignal δ_{l,ist} und δ_{r,ist} sowie Signale von im Fahrzeug vorhandenen Sensoren und/oder anderen Steuergeräten über Fahrzeug- und Umgebungsbedingungen wie z. B. die Fahrgeschwindigkeit, die Beschaffenheit der Fahrbahn, etc. Auf der Basis der getrennt gemessenen Ist-Lenkmomentsignale M_{l,ist} und M_{r,ist} läßt sich erkennen, ob die Lenkmomente periodisch schwanken und zwar getrennt für jedes Rad. Wenn eine solche periodische Änderung der Rückstellmomente M_{l,ist} und M_{r,ist} erkannt wurde, wertet die Steuer/Regeleinheit 10 diese periodische Änderung in Abhängigkeit von der Drehzahl der gelenkten Räder Vₗ und Vᵣ aus, indem sie die durch periodische Fahrbahnunebenheiten hervorgerufenen Störungen eliminiert. Nachdem die Steuer/Regeleinheit 10 durch die Auswertung sicher erkannt hat, daß die periodische Änderung der Lenkmomente auf eine Unwucht zurückzuführen ist, erzeugt sie Anzeigesignale 15, 16. Das Anzeigesignal 15 läßt sich dazu verwenden, dem Fahrer über einen Lenkradsimulator 3 eine haptische Rückmeldung ähnlich wie bei der herkömmlichen direkten Lenkung zu erzeugen. Das Signal 16 kann zu einer optischen und/oder akustischen Anzeige an einem Anzeigedisplay 4 verwendet werden.

Gemäß dem zweiten erfindungsgemäßen Aspekt erkennt die Steuer/Regeleinheit 10 anhand der getrennt für jedes gelenkte Rad Vₗ und Vᵣ gemessenen Lenkrückstellmomente M_{l,ist} und M_{r,ist}, ob die Lenkrückstellmomente der gelenkten Räder Vₗ, Vᵣ von einem vorbestimmten Normalwert abweichen, und zwar abhängig vom gemessenen Ist-Lenkwinkel und getrennt für jedes gelenkte Rad Vₗ, Vᵣ. Bei einer Abweichung vom Normalwert erzeugt dann die Steuer/Regeleinheit 10 ein Signal, das einen falschen Luftdruckwert angibt und das wie oben im Falle der Unwuchterkennung mittels Ausgangssignalen 15 und 16 einem Fahrer angezeigt werden kann.

Um störende Einflüsse, wie sie z. B. durch eine µ-Split-Fahrbahn hervorgerufen werden, auszuschalten, empfängt die Steuer/Regeleinheit 10 Signale über die Umgebungsbedingungen, z. B. die Fahrbahnbeschaffenheit, und außerdem über die Fahrzeugbedingungen, wie z. B. die Fahrgeschwindigkeit. In einem Auswerteschritt werden dann solche störenden Einflüsse von den Größen eliminiert, die von der Steuer/Regeleinheit 10 zur Erkennung des Reifenluftdrucks der gelenkten Räder Vₗ, Vᵣ ausgewertet werden.

In dem obigen Ausführungsbeispiel werden die Lenkmomente M_{l,ist} und M_{r,ist} separat für jedes einzelne gelenkte Rad gemessen. Dies erlaubt auch, daß die Steuer/Regeleinheit zur Ermittlung eines links und rechts unterschiedlichen Reifenluftdrucks eine Differenz zwischen den gemessenen Lenkrückstellmomenten bildet.

Selbstverständlich ist das oben geschilderte Beispiel eines Steer-by-Wire-Systems mit getrennter Messung der jedem Rad eigenen Lenkrückstellmoment M_{l,ist} und M_{r,ist} nur beispielhaft, und ein erfindungsgemäßes Unwuchterkennungsverfahren sowie ein erfindungsgemäßes Reifenluftdruckerkennungsverfahren läßt sich auch in einem Steer-by-Wire-System ausführen, bei dem die gelenkten Räder gemeinsam von einem einzigen elektrischen Stellmotor beaufschlagt werden.

Gleichermaßen lassen sich die erfindungsgemäßen Verfahren auch bei einer elektrischen Servolenkung ausführen, bei der ein elektrischer Stellmotor die vom Fahrer am Lenkrad aufgebrachten Lenkmomente lediglich unterstützt.

## Patentansprüche

1. Verfahren zur Erkennung einer Unwucht in durch eine elektrische Lenkung gelenkten Rädern eines Kraftfahrzeugs mittels einer Messung des oder der an den gelenkten Rädern durch einen elektrischen Stellmotor aufgebrachten Lenkmoments oder Lenkmomente,
**gekennzeichnet durch**
einen Erkennungsschritt, der erkennt, ob sich die Lenkmomente periodisch in Abhängigkeit von der Drehzahl der gelenkten Räder ändern, und
einen Auswerteschritt, der, wenn das Ergebnis des Erkennungsschritts positiv ist, ein eine Unwucht an den zwei gelenkten Rädern oder an einem jeweiligen gelenkten Rad angebendes Signal erzeugt.

2. Verfahren zur Erkennung des Reifendrucks in durch eine elektrische Lenkung gelenkten Rädern eines Kraftfahrzeugs mittels einer Messung des oder der an den gelenkten Rädern durch einen elektrischen Stellmotor aufgebrachten Lenkmoments oder Lenkmomente,
**gekennzeichnet durch**
einen Erkennungsschritt, der erkennt, ob die Lenkrückstellmomente der gelenkten Räder abhängig von einem jeweiligen Lenkwinkel von einem vorbestimmten Normalwert abweichen, und
einen Auswerteschritt, der, wenn das Ergebnis des Erkennungsschritts positiv ist, ein einen falschen Luftdruckwert in einem der Reifen oder in beiden Reifen angebendes Signal erzeugt.

3. Verfahren nach Anspruch 1 oder 2, **dadurch gekennzeichnet, daß** die Lenkmomente getrennt für jedes einzelne gelenkte Rad gemessen werden.

4. Verfahren nach Anspruch 3, **dadurch gekennzeichnet, daß** der Auswerteschritt zur Ermittlung eines falschen Luftdruckwerts eine Differenzmessung zwischen den Lenkrückstellmomenten des linken und rechten gelenkten Rads über mehrere Lenkzyklen ausführt.

5. Verfahren nach Anspruch 3 oder 4, **dadurch gekennzeichnet, daß** der Auswerteschritte das die Unwucht oder den falschen Luftdruck angebende Signal jeweils getrennt für jedes einzelne gelenkte Rad erzeugt.

6. Verfahren nach einem der Ansprüche 1 bis 5, **dadurch gekennzeichnet, daß** das oder die eine Unwucht bzw. einen falschen Luftdruckwert angebende Signal oder Signale einem Fahrer des Kraftfahrzeugs angezeigt werden.

7. Verfahren nach Anspruch 6, **dadurch gekennzeichnet, daß** die Anzeige akustisch und/oder optisch oder durch eine haptische Rückmeldung am Lenkrad erzeugt wird.

8. Verfahren nach einem der Ansprüche 1 bis 4, **dadurch gekennzeichnet, daß** das oder die vom Auswerteschritt erzeugte(n) Signal(e) in einem Fehlerspeicher gespeichert werden.

## Claims

1. Method for detecting an imbalance in the wheels of a motor vehicle which are steered by an electrical steering system, by measuring the steering torque or steering torques which are applied at the steered wheels by means of an electric servomotor, **characterized by** a detection step which detects whether the steering torques change periodically as a function of the rotational speed of the steered wheels, and an evaluation step which, when the result of the detection step is positive, generates a signal which indicates an imbalance at the two steered wheels or at a respective steered wheel.

2. Method for detecting the tyre pressure in wheels of a motor vehicle which are steered by means of an electrical steering system, by measuring the steering torque or steering torques applied at the steered wheels by means of an electric servomotor, **characterized by** a detection step which detects whether the steering resetting torques of the steered wheels deviate from a predetermined normal value as a function of a respective steering angle, and an evaluation step which, if the result of the detection step is positive, generates a signal which indicates an incorrect air pressure value in one of the tyres or in both tyres.

3. Method according to Claim 1 or 2, **characterized in that** the steering toques are measured separately for each individual steered wheel.

4. Method according to Claim 3, **characterized in that** the evaluation step for determining an incorrect air pressure value carries out a difference measurement between the steering resetting torques of the left-hand and right-hand steered wheels over a plurality of steering cycles.

5. Method according to Claim 3 or 4, **characterized in that** the signal which indicates the imbalance or incorrect air pressure is generated by the evaluation step separately for each individual steered wheel in each case.

6. Method according to one of Claims 1 to 5, **characterized in that** the signal or signals indicating an imbalance or an incorrect air pressure value are indicated to a driver of the motor vehicle.

7. Method according to Claim 6, **characterized in that** the display is generated audibly and/or visually or by means of haptic feedback at the steering wheel.

8. Method according to one of Claims 1 to 4, **characterized in that** the signal or signals generated by the evaluation step are stored in a fault memory.

## Revendications

1. Procédé pour détecter un balourd dans des roues commandées par une direction électrique, d'un véhicule automobile, en mesurant le ou les couples directionnels exercés par un moteur électrique de réglage sur le ou les roues dirigées,
**caractérisé par**
- une étape de détection déterminant si les couples directionnels varient périodiquement en fonction de la vitesse de rotation des roues dirigées,
- une étape d'évaluation qui, si l'étape précédente a eu un résultat positif, produit un signal indiquant la présence d'un balourd sur les deux roues dirigées ou sur une roue dirigée.

2. Procédé pour détecter la pression des pneumatiques de roues, commandées par une direction électrique, d'un véhicule automobile, en mesurant le ou les couples directionnels exercés par un moteur électrique de réglage sur le ou les roues dirigées,
**caractérisé par**
- une étape de détection déterminant si les couples directionnels de rappel des roues dirigées, indépendamment de l'angle directionnel, s'écartent de la valeur normale prédéfinie,
- une étape d'évaluation qui, si l'étape précédente a eu un résultat positif, produit un signal indiquant qu'une valeur défectueuse de la pression d'air existe dans un pneumatique ou dans les deux.

3. Procédé selon la revendication 1 ou 2,
**caractérisé en ce que**
les couples directionnels sont mesurés séparément pour chacune des roues dirigées.

4. Procédé selon la revendication 3,
**caractérisé en ce qu'**
à l'étape d'évaluation, pour déterminer la valeur défectueuse de la pression, il est effectué une mesure de la différence entre les couples de rappel de la roue dirigée gauche et de la roue dirigée droite, sur plusieurs cycles directionnels.

5. Procédé selon l'une des revendications 3 ou 4,
**caractérisé en ce que**
le signal indiquant, aux étapes d'évaluation, le balourd ou la pression d'air défectueuse est donné séparément pour chacune des roues.

6. Procédé selon l'une des revendications 1 à 5,
**caractérisé en ce que**
le ou les signaux indiquant un balourd ou une pression d'air défectueuse est ou sont indiqués au conducteur du véhicule.

7. Procédé selon la revendication 6,
**caractérisé en ce que**
l'indication est acoustique et/ou optique, ou tactile donnée par l'intermédiaire du volant.

8. Procédé selon l'une des revendications 1 à 4,
**caractérisé en ce que**
le ou les signaux produits à l'étape d'évaluation est ou sont enregistrés dans une mémoire de défauts.
